(19) Europäisches Patentamt
European Patent Office
Office européen des brevets

(11) **EP 0 608 887 B1**

(12) **EUROPEAN PATENT SPECIFICATION**

(45) Date of publication and mention
of the grant of the patent:
**16.04.2003 Bulletin 2003/16**

(51) Int Cl.$^7$: **H01M 6/06**, H01M 4/42

(21) Application number: **94101221.3**

(22) Date of filing: **27.01.1994**

(54) **Manganese dry cell**

Mangan-Trockenzelle

Pile sèche à base de manganèse

(84) Designated Contracting States:
**BE CH DE FR GB IT LI NL SE**

(30) Priority: **29.01.1993 JP 1401193**

(43) Date of publication of application:
**03.08.1994 Bulletin 1994/31**

(73) Proprietor: **MATSUSHITA ELECTRIC INDUSTRIAL CO., LTD.**
**Kadoma-shi, Osaka 571-8501 (JP)**

(72) Inventors:
• **Murakami, Hajime**
**Kishiwada-shi (JP)**
• **Ashihara, Ryohei**
**Neyagawa-shi (JP)**

(74) Representative: **Patentanwälte**
**Leinweber & Zimmermann**
**Rosental 7**
**80331 München (DE)**

(56) References cited:
**EP-A- 0 384 975**       **US-A- 5 308 374**

**Description**

BACKGROUND OF THE INVENTION

1) Field of the Invention

The present invention relates to a manganese dry cell free from mercury and cadmium.

2) Related Art

In order to enhance the processability and mechanical strength of the negative pole can of a dry cell and also to prevent the corrosion of the negative pole (self-consumption of a dry cell), it has been the ordinary practice to add 0.03 to 0.1% by weight of cadmium and 0.1 to 0.8% by weight of lead to the zinc that constitutes a negative pole can. These additive metals have recently raised an environmental pollution problem at the disposal of spent dry cells. As to the mercury of manganese dry cells, the cells are now produced substantially without any addition of mercury, but as to cadmium and lead it is urgently required to produce the cells without any cadmium and lead.
However, it is known that the processability and mechanical strength of negative pole cans made from a zinc alloy are considerably lowered and corrosion of zinc is more liable to take place when neither cadmium nor lead is added to the negative pole can. To solve this problem, it has been proposed to add manganese or magnesium to the zinc alloy (JP-B-50-11576 and JP-A-56-143662). By adding these metals to zinc to make an alloy, the processability and mechanical strength of a negative pole can could be equivalent or superior to those of a negative pole can made from the conventional cadmium and lead-containing zinc alloy, but had a poor zinc corrosion resistance, as compared with that of a negative pole can made from the conventional cadmium and lead-containing zinc alloy.
Further, EPO 384 975 A1 discloses a primary element comprising a negatine pole can made from a zinc allay containing at least one of In and Bi together with at least one of Mg and Zi.

SUMMARY OF THE INVENTION

An object of the present invention is to solve the above-mentioned problem, that is, to provide a manganese dry cell comprising a negative pole can free from mercury and cadmium and having a processability and mechanical strength equivalent to those of the conventional cadmium-containing negative pole can and also having a zinc corrosion resistance equivalent thereto.
According to the present invention there is provided a manganese dry cell free from mercury, which comprises a negative pole can made from a zinc alloy as specified in the appended claims.
Even without cadmium the negative pole can made from a zinc alloy containing the component or components according to the present invention can have a processability and mechanical strength equivalent to those of a negative pole can made from the conventional negative pole can material, that is, cadmium and lead-containing zinc alloy, and also can have a zinc corrosion resistance equivalent or superior thereto.
Even without cadmium and lead, the present negative pole can has an effect equivalent to that of a negative pole can made from the conventional negative pole can material, that is, cadmium and lead-containing zinc alloy.
Furthermore, by adding metal element or elements to the zinc negative pole can of a manganese dry cell according to the present invention, not only the effect on zinc corrosion resistance, but also an effect on enhancement of negative pole can strength can be obtained at the same time.

BRIEF DESCRIPTION OF THE DRAWINGS

Fig. 1 is a perspective view showing a procedure for determining the mechanical strength of a negative pole can.
Fig. 2 is a vertical, partly cutaway cross-sectional view of a cylindrical manganese dry cell according to the present invention.

PREFERRED EMBODIMENTS OF THE INVENTION

The present invention will be described in detail below, referring to Examples and Comparative Examples. Examples 1-11 and 14-22 are outside the scope of the invention and are also to be regarded as Comparative Examples.

Examples 1 to 24 and Comparative Examples 1 to 7

Molten zinc alloys were prepared by melting zinc of 99.99% purity at about 500°C in a low frequency induction furnace and adding predetermined amounts of elements as shown in the following Tables 1 and 2 thereto.

Table 1

| | Metal elements in zinc alloy and their content (% by weight) | | | | | Zinc can strength (kg·f) | | Generated gas volume when preserved at 45°C (µℓ/g·day) |
|---|---|---|---|---|---|---|---|---|
| | Pb | Cd | In | Bi | Ca | $\bar{x}$ | σ | |
| Ex. 1* | 0.01 | 0 | 0.01 | 0 | 0 | 2.78 | 0.18 | 32 |
| 2* | 0.20 | 0 | 0.01 | 0 | 0 | 2.86 | 0.17 | 25 |
| 3* | 0.80 | 0 | 0.01 | 0 | 0 | 2.94 | 0.14 | 20 |
| 4* | 0.20 | 0 | 0.001 | 0 | 0 | 2.83 | 0.12 | 41 |
| 5* | 0.20 | 0 | 0.05 | 0 | 0 | 3.05 | 0.20 | 27 |
| 6* | 0.20 | 0 | 0.01 | 0.001 | 0 | 2.80 | 0.15 | 23 |
| 7* | 0.20 | 0 | 0.01 | 0.003 | 0 | 2.88 | 0.19 | 22 |
| 8* | 0.20 | 0 | 0.01 | 0.01 | 0 | 2.92 | 0.13 | 23 |
| 9* | 0.20 | 0 | 0 | 0.003 | 0.0005 | 3.29 | 0.17 | 43 |
| 10* | 0.20 | 0 | 0 | 0.003 | 0.005 | 3.69 | 0.16 | 38 |
| 11* | 0.20 | 0 | 0 | 0.003 | 0.01 | 3.78 | 0.18 | 40 |
| 12 | 0.20 | 0 | 0.01 | 0 | 0.005 | 3.88 | 0.12 | 22 |
| 13 | 0.20 | 0 | 0.01 | 0.003 | 0.005 | 3.94 | 0.17 | 18 |

*Examples for comparison purposes

- to be continued -

EP 0 608 887 B1

Table 1 (cont'd)

| | | | | | | | | |
|---|---|---|---|---|---|---|---|---|
| Ex. 14* | 0 | 0 | 0.001 | 0 | 0 | 2.70 | 0.11 | 53 |
| 15* | 0 | 0 | 0.01 | 0 | 0 | 2.85 | 0.18 | 44 |
| 16* | 0 | 0 | 0.05 | 0 | 0 | 2.92 | 0.14 | 41 |
| 17* | 0 | 0 | 0.01 | 0.001 | 0 | 2.72 | 0.18 | 38 |
| 18* | 0 | 0 | 0.01 | 0.003 | 0 | 2.74 | 0.14 | 35 |
| 19* | 0 | 0 | 0.01 | 0.01 | 0 | 2.78 | 0.19 | 34 |
| 20* | 0 | 0 | 0 | 0.003 | 0.0005 | 3.08 | 0.13 | 52 |
| 21* | 0 | 0 | 0 | 0.003 | 0.005 | 3.14 | 0.18 | 50 |
| 22* | 0 | 0 | 0 | 0.003 | 0.01 | 3.31 | 0.20 | 53 |
| 23 | 0 | 0 | 0.01 | 0 | 0.005 | 3.90 | 0.12 | 36 |
| 24 | 0 | 0 | 0.01 | 0.003 | 0.005 | 3.97 | 0.17 | 33 |

* Examples for comparison purposes

EP 0 608 887 B1

Table 2

| | Metal elements in zinc alloy and their content (% by weight) | | | | | Zinc can strength (kg·f) | | Generated gas volume when preserved at 45°C ($\mu\ell$/g·day) |
|---|---|---|---|---|---|---|---|---|
| | Pb | Cd | In | Bi | Ca | $\overline{x}$ | σ | |
| Comp. Ex. 1 | 0.20 | 0.05 | 0 | 0 | 0 | 2.78 | 0.14 | 59 |
| 2 | 0.20 | 0 | 0 | 0 | 0 | 2.03 | 0.11 | 75 |
| 3 | 0 | 0 | 0 | 0 | 0 | 0.87 | 0.08 | 82 |
| 4 | 0.20 | 0 | 0 | 0.003 | 0 | 2.31 | 0.14 | 53 |
| 5 | 0.20 | 0 | 0 | 0 | 0.005 | 3.68 | 0.14 | 64 |
| 6 | 0 | 0 | 0 | 0.003 | 0 | 1.95 | 0.07 | 51 |
| 7 | 0 | 0 | 0 | 0 | 0.005 | 3.63 | 0.22 | 103 |

EP 0 608 887 B1

Zinc alloy shown in Comparative Example 1 in Table 2 corresponds to the conventional negative pole can zinc alloy containing 0.20% by weight of lead and 0.05% by weight of cadmium so far employed.

Then, the molten zinc alloys were rolled to form sheets having a predetermined thickness while cooling the molten zinc alloys, and the resulting metal sheets were punched by a press to obtain circular or hexagonal pieces having a predetermined size. Negative pole cans for manganese dry cells were made from the thus obtained circular or hexagonal pieces according to an impact shaping procedure.

Mechanical strength of the thus prepared negative pole cans was measured according to the following procedure.

A negative pole can 12 was placed on a V-notched block 11 and a conical press edge 13 was placed at a position by 10 mm inwards from the open end of the negative pole can 12 and pressed against the negative pole can 12. The displacement of the contact point of the conical press edge 13 in the moving direction of the conical press edge 13 and the intensity of a force applied to the contact point were recorded by a recorder. In case of negative pole cans of size R20 (radius of curvature: 20 mm; unit D cell), the intensity of a force became almost constant when the displacement reached about 4 mm, and thus the force applied to the contact point at a displacement of 4 mm was deemed to be the mechanical strength of the negative pole can for the sake of convenience.

In order to evaluate an effect on corrosion resistance of the respective negative pole cans, a hydrogen gas generation test in an electrolyte was carried out with the respective negative pole cells, where a negative pole can cut to a predetermined weight was dipped into 5 ml of an aqueous solution containing 30% by weight of zinc chloride and 1.9% by weight of ammonium hydroxide as an electrolyte kept constantly at 45°C.

The results of measurements of mechanical strength and generated gas volume are shown in the foregoing Tables 1 and 2.

In the column "Zinc can strength" of Tables 1 and 2, $\bar{x}$ shows an average of mechanical strength of 10 negative pole cans and a shows its standard deviation, and in the column "Generated gas volume when preserved at 45°C" of Tables 1 and 2, the generated gas volume shows an average of 3 negative pole cans.

As is evident from Tables 1 and 2, lead-containing zinc alloys of Examples 1 to 3 had better effects on the maintenance of strength and suppression of hydrogen gas generation than the alloys of Comparative Examples 1 and 2. Lead-free zinc alloys of Examples 14 to 24 had a little less effect on the suppression of hydrogen gas generation than lead-containing zinc alloys of Examples 1 to 13, but the effect was better than that of alloys of Comparative Examples 1 and 2.

When the In content of the negative pole cans was outside the range of 0.001 to 0.05% by weight, the Bi content outside the range of 0.001 to 0.005% by weight and the Ca content outside the range of 0.0005 to 0.01% by weight, the processability of such negative pole cans was not better than that of the conventional negative pole cans made from cadmium and lead-containing zinc alloys and also the mechanical strength was lower, when their contents were smaller, whereas when their contents were larger, the zinc alloys were more brittle at rolling, resulting in formation of cracks, or failure of maintenance of practical discharge characteristics when the cells were preserved.

Thus, it is necessary that the contents of additive elements be within the above-mentioned ranges, respectively, whereby the processability and mechanical strength equivalent to those of the conventional cadmium-containing negative pole cans and also an equivalent zinc corrosion resistance can be obtained. By comparison of Examples 9 to 11 with Comparative Example 4 and Examples 20 to 22 with Comparative Example 6, it is evident that the mechanical strength was poor in case of only Bi as an additive element and it is necessary that the zinc alloy further contains In and Ca elements to enhance the strength.

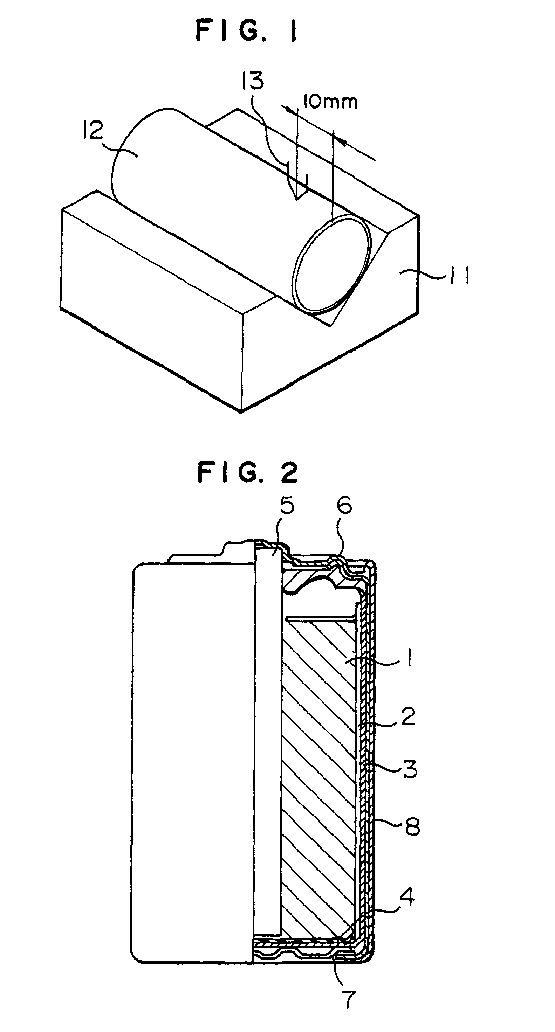

Fig. 2 shows a vertical, partly cutaway cross-section of a manganese dry cell according to the present invention, which comprises a negative pole can 3, a positive pole paste 1 filled in the can 3 through a separator 2, a carbon rod 5 placed at the center of the paste 1 and penetrated through the paste 1 down to a bottom insulating paper 4, the negative pole can 3 being in contact with a negative pole terminal plate 7 at the bottom and being encased in an outer casing 8 through an insulator at the side and the top, the top of the outer encasing 8 and the carbon rod 5 being sealed with a positive pole cap-integrating sealing plate 6.

By using the present negative pole can as a constituent member of a manganese dry cell, an equivalent mechanical strength (necessary for production of cells) to that of a negative pole can made from the conventional negative pole can material, that is, cadmium and lead-containing zinc alloy, can be obtained, and furthermore an equivalent or superior zinc corrosion resistance to that of the conventional negative pole can also can be obtained when the cells are preserved. That is, the present invention can provide a useful manganese dry cell with less environmental pollution.

**Claims**

**1.** A mercury-free manganese dry cell, which comprises a negative pole can made from a zinc alloy containing 0.01 to 0.8 % by weigh of lead, 0.0005 to 0.01 % by weight of calcium and at least one member selected from the group consisting of 0.0001 to 0.05 % by weight of indium and 0.001 to 0.005 % by weight of bismuth, without any cadmium provided that said Zinc alloy does not contain calcium and bismuth without any indium.

2. A mercury-free manganese dry cell, which comprises a negative pole can made from a zinc alloy containing 0.0005 to 0.01 % by weight of calcium and at least one member selected from the group consisting of 0.001 to 0.05 % by weight of indium and 0.001 to 0.005 % by weight of bismuth, without any cadmium and lead, provided that said zinc alloy does not contain calcium and bismuth without containing indium.

**Patentansprüche**

1. Quecksilberfreie Mangantrockenzelle, die eine negative Poldose aufweist, welche aus einer 0,01 bis 0,8 Gewichts-% Blei, 0,0005 bis 0,01 Gewichts-% Kalzium und zumindest einen aus der aus 0,0001 bis 0,05 Gewichts-% Indium und 0,001 bis 0,005 Gewichts-% Wismut bestehenden Gruppe ausgewählten Bestandteil enthaltenden Zinklegierung ohne jegliches Kadmium hergestellt ist, vorausgesetzt, dass die Zinklegierung nicht Kalzium und Wismut ohne jegliches Indium enthält.

2. Quecksilberfreie Mangantrockenzelle, die eine negative Poldose aufweist, welche aus einer 0,0005 bis 0,01 Gewichts-% Kalzium und zumindest einen aus der aus 0,001 bis 0,05 Gewichts-% Indium und 0,001 bis 0,005 Gewichts-% Wismut bestehenden Gruppe ausgewählten Bestandteil enthaltenden Zinklegierung ohne jegliches Kadmium und Blei hergestellt ist, vorausgesetzt, dass die Zinklegierung nicht Kalzium und Wismut, ohne Indium zu enthalten, enthält.

**Revendications**

1. Pile sèche au manganèse sans mercure, qui comprend un boîtier de pôle négatif réalisé à partir d'un alliage de zinc contenant 0,01% à 0,8 % en poids de plomb, 0,0005% à 0,1 % en poids de calcium et au moins un élément choisi dans le groupe constitué de 0,0001% à 0,05 % en poids d'indium et 0,001% à 0,005 % en poids de bismuth sans aucun cadmium, à condition que ledit alliage de zinc ne contienne pas de calcium ni de bismuth sans aucun indium.

2. Pile sèche au manganèse sans mercure, qui comprend un boîtier de pôle négatif réalisé à partir d'un alliage de zinc contenant 0,0005% à 0,01 % en poids de calcium et au moins un élément choisi dans le groupe constitué de 0,001% à 0,05 % en poids d'indium et 0,001% à 0,005 % en poids de bismuth, sans aucun cadmium ni plomb, à condition que ledit alliage de zinc ne contienne pas de calcium ni de bismuth sans contenir d'indium.

# FIG. 1

13    10mm

12

11

# FIG. 2

5    6

1

2

3

8

4

7